# EUROPÄISCHE PATENTSCHRIFT

(11) **EP 2 596 696 B1**
(45) Veröffentlichungstag und Bekanntmachung des Hinweises auf die Patenterteilung: **31.08.2016**
(21) Anmeldenummer: 12186302.1
(22) Anmeldetag: 27.09.2012
(51) Int. Cl.: A01F 12/26, A01F 12/44, A01F 12/28, A01F 12/18

(54) **Mähdrescher mit einer als Mehrtrommelanordnung ausgebildeten Dresch- und Trenneinrichtung**
Combine harvester with a threshing and separating device in the form of a multi-drum assembly
Moissonneuse-batteuse avec un dispositif de séparation et de battage conçu comme un agencement à plusieurs tambours

(30) Priorität: 28.11.2011 DE 102011055749
(43) Veröffentlichungstag der Anmeldung: 29.05.2013
(73) Patentinhaber: CLAAS Selbstfahrende Erntemaschinen GmbH, 33428 Harsewinkel (DE)
(72) Erfinder: Bühlmeier, Robert, 33442 Herzebrock-Clarholz (DE)

(56) Entgegenhaltungen:
- EP-A2- 0 823 201
- CA-A1- 2 130 724
- DE-A1- 2 037 658
- DE-A1-102007 031 807
- GB-A- 1 184 894

## Beschreibung

Die Erfindung betrifft einen Mähdrescher mit einer als Mehrtrommelanordnung ausgebildeten Dresch- und Trenneinrichtung, die zumindest aus einer mit einem Dresch- und Abscheidekorb zusammenwirkenden Dreschtrommel, einer dieser in Förderrichtung unmittelbar oder mittelbar nachgeordneten Abscheidetrommel sowie aus einer dieser folgenden Strohwendetrommel besteht, wobei die Abscheidetrommel mit einem Leit-und Abscheideelement zusammenwirkt und die Strohwendetrommel oberhalb der Abscheidetrommel und in horizontaler Richtung zu dieser versetzt angeordnet ist, und mit einer der Strohwendetrommel nachgeordneten Nachabscheideeinrichtung.

Dreschwerke mit Mehrtrommelanordnungen, die vorzugsweise in Mähdreschern mit hoher Flächenleistung verwendet werden, sind bekannt dafür, dass mit ihnen auch unter schwierigsten Bedingungen ein effizienter Ausdrusch des Erntegutes erzielt werden kann. Außerdem lassen sich mit Dreschwerken in Mehrtrommelanordnung bei hoher Durchsatzleistung, die aufgrund sich ändernder Bestandsdichten des Erntegutes erforderlich sein kann, optimale Druschergebnisse erzielen. Ferner können durch die besondere Ausbildung der rotierenden Trommeln und der mit ihnen zusammenwirkenden Dresch- und Abscheidekörbe die Entstehung von Bruchkorn vermieden und eine optimale Abscheidewirkung auch bei unterschiedlichem Reife- oder Feuchtegrad des Dreschguts realisiert werden.

Es sind dabei unterschiedliche Ausführungen von Mehrtrommeldreschwerken allgemein bekannt. Zum einen kann der Dreschtrommel eine Vorbeschleunigungstrommel vorgeschaltet sowie eine Abscheidetrommel und eine Strohwendetrommel nachgeschaltet sein. Zum anderen gibt es Anordnungen, bei welchen der Dreschtrommel das Erntegut unmittelbar über einen Schrägförderer zugeführt wird, wobei der Dreschtrommel dann eine Fördertrommel, eine Abscheidetrommel sowie eine Strohwendetrommel nachgeschaltet sind. Je nach der Lage der einzelnen an den Dresch- und Abscheidetrommeln vorgesehenen Körbe zueinander können zwischen diesen noch weitere Fördertrommeln vorgesehen sein.

Ein Mähdrescher mit einer als Mehrtrommelanordnung ausgebildeten Dresch- und Trenneinrichtung der im Oberbegriff des Patentanspruches 1 genannten Gattung ist aus der DE 10 2006 007 809 A1 bekannt. Dabei sind zwei Gutfördertrommeln, die als Abscheidetrommel und Strohwendetrommel dienen, ein als gelochtes Blech ausgebildetes Leit- und Abscheideelement zugeordnet, das über zwei aufeinander folgende Trennebenen verfügt. Jeder der Trennebenen folgen eine Gruppe von Hordenschüttlern und ein Rücklaufboden, die demzufolge übereinander angeordnet sind. Ein Gutstrom, der bis zum Ende des Leit- und Abscheideelements, also bis in die letzte Trennebene gefördert wird, wird dort über die Strohwendetrommel in einen Förderkanal zwischen einer Leitschiene und einem am Leit- und Abscheideelement vorgesehenen Führungsrechen geführt, von wo aus der aus Stroh und einem restlichen Körneranteil bestehende Gutstrom auf die in der obersten Ebene vorgesehenen Hordenschüttler gelangt.

Weiterhin ist aus der DE 10 2007 031 807 A1 eine Dresch- und Trenneinrichtung mit Mehrtrommelanordnung für einen Mähdrescher bekannt, bei der das Erntegut aus einem Schrägförderer unmittelbar in eine aus Dreschtrommel und Dreschkorb gebildete Einheit gelangt. Von dort aus wird es über eine oberschlächtig arbeitende Fördertrommel einer aus Abscheidetrommel und Abscheidekorb gebildeten Anordnung zugeführt. Am Ende des Abscheidekorbes befindet sich ein Fingerrechen, mit dem eine Strohwendetrommel zusammenwirkt.

Die CA 2 130 724 A1 beschreibt einen Mähdrescher mit einer Dreschvorrichtung, die einen Dreschtrommel und einen die Dreschtrommel umschlingenden Dreschkorb umfasst. Der Dreschkorb weist einen hinteren Abschnitt auf, der um eine horizontale Achse gegenüber dem vorderen Abschnitt des Dreschkorbes schwenkbar ist. Durch das Schwenken des hinteren Abschnittes des Dreschkorbs wird der Abstand zur Dreschtrommel vergrößert.

Es ist Aufgabe der vorliegenden Erfindung eine Dresch- und Trenneinrichtung der vorgenannten Gattung derart weiterzubilden, dass, abgestimmt auf den Zustand des Erntegutes, dessen schonende Aufbereitung im Förderspalt zwischen dem Leit- und Abscheideelement einerseits und der Abscheidetrommel sowie der Strohwendetrommel andererseits gewährleistet ist.

Diese Aufgabe wird, ausgehend vom Oberbegriff des Patentanspruchs 1, in Verbindung mit dessen kennzeichnenden Merkmalen gelöst.

Durch das Verschwenken des mit Abstand tangential zur Strohwendetrommel verlaufenden Teilabschnitts lässt sich der ausgangsseitig des Leit- und Abscheideelements vorgesehene Förderspalt, der einerseits durch die Strohwendetrommel begrenzt wird, entsprechend dem jeweiligen Zustand des Erntequtes variieren.

In herkömmlichen Dresch- und Trenneinrichtungen, wie sie aus der gattungsbildenden DE 10 2006 007 809 A1 und aus der DE 10 2007 031 807 A1 bekannt sind, nimmt demgegenüber das Leit- und Abscheideelement zur Strohwendetrommel eine fixe Position ein. Bei der Verarbeitung von sehr trockenem Erntegut führt aber, wie festgestellt werden konnte, eine wiederholte Umlenkung im Bereich der Abscheidetrommel und der Strohwendetrommel zu einem erhöhten Auftreten von Bruchstroh. Dadurch kann der Nachteil auftreten, dass sich die Abscheideleistung der ausgangsseitig der Dresch- und Trenneinrichtung angeordneten Nachabscheideeinrichtung verschlechtert. Die Nachabscheideeinrichtung wird üblicherweise durch schwingend bewegte Hordenschüttler gebildet, die eine waschbrettartige Oberfläche mit darin angeordneten Abscheideöffnungen aufweisen. Außerdem ist jeder der Hordenschüttler mit mehreren Fallstufen versehen und weist unterhalb der mit den Abscheideöffnungen versehenen Abdeckblechen jeweils eine Schüttlerrücklauftasche auf, die das abgeschiedene Getreide, Mais, Raps usw. auf einen unterhalb der Hordenschüttler liegenden Rücklaufboden leitet.

Wenn nun durch die Dresch- und Trenneinrichtung in erheblichem Maße Bruchstroh erzeugt wird, so bildet sich auf der mit den Abscheideöffnungen versehenen Oberfläche der Schüttler nach relativ kurzer Betriebszeit eine relativ dichte Matte aus diesem Bruchstroh und Kaff aus, die das Abscheiden von Restkorn auf den Hordenschüttlern vermindert. Diese Matte kann eine derartige Dichtigkeit aufweisen, dass sie für das auftretende Restkorn nahezu undurchdringlich ist. Dabei wird die Matte zwar durch die Hordenschüttler weitergefördert, sie wird aber dann, wenn das Halmgut sehr trocken ist, fortwährend durch die Dresch- und Trenneinrichtung neu aufgebaut. Die durch eine Ausbildung der Dresch- und Trenneinrichtung als Mehrtrommelanordnung erzielte Erhöhung der Abscheideleistung kann somit durch eine geringere Abscheideleistung der Nachabscheideeinrichtung wieder reduziert werden. Dieses Problem kann durch die erfindungsgemäße Ausbildung des Leit- und Abscheideelements wirkungsvoll beseitigt werden.

Danach soll ein ausgangsseitig des Leit- und Abscheideelements vorgesehener Teilabschnitt vorzugsweise derart verstellbar sein, dass eine flexibel veränderbare Gutführung ermöglicht wird. Darüber hinaus besteht auch die Möglichkeit, zur Vermeidung der zuvor geschilderten Probleme auch den ersten Teilabschnitt oder weitere Teilabschnitte des Leit- und Abscheideelements verstellbar auszuführen. Es ist zweckmäßig, in Abhängigkeit vom Feuchtigkeitsgehalt des Halmguts zumindest den Winkel des letzten Teilabschnitts zu variieren, um bei sehr trockenem Halmgut eine zusätzliche extreme Umlenkung des Gutstromes an der Strohwendetrommel und damit die Bildung von Bruchstroh zu vermeiden. Folglich kann sich auch keine Matte aus Bruchstroh und Kaff auf der Oberfläche der Hordenschüttler bilden, so dass das eventuell noch vorhandene Restkorn über die Abscheideöffnungen der Hordenschüttler prozesssicher abgeführt werden kann.

Gemäß einer bevorzugten Ausführungsform der Erfindung soll die Abscheidetrommel mit über deren Umfang verteilten Zinken versehen sein, wobei Zinken der Zinkenreihen jeweils gegenüber einer Drehrichtung der Abscheidetrommel nach hinten geneigt sind. Mit einer derartigen Ausbildung der Abscheidetrommel lässt sich eine günstige Abscheidewirkung erzielen, wobei das Stroh schonend behandelt wird. Die Neigung der Zinken führt dazu, dass sich das Stroh im Abgabebereich der Abscheidetrommel von diesem lösen kann. Dadurch wird außerdem vermieden, dass sich das Stroh um die Abscheidetrommel wickelt, wodurch anderenfalls auf Dauer der Dresch- und Abscheidespalt verstopfen würde.

Alternativ dazu besteht aber auch die Möglichkeit, die Abscheidetrommel aus einem zylindrischen Grundkörper herzustellen, auf dem, jeweils zueinander versetzt, Mitnehmer angeordnet sind, wobei jeder Mitnehmer eine gegenüber einer Drehrichtung der Abscheidetrommel nach hinten geneigte Wirkfläche aufweist. Eine derartige Trommelausbildung wird in an sich bekannter Weise für Vorbeschleunigungstrommeln in Mehrtrommeldreschwerken verwendet. Vorzugsweise sollte im Falle einer derartigen Ausbildung der Abscheidetrommel der erste Teilabschnitt des Leit- und Abscheideelementes gekrümmt ausgebildet sein und somit im Wesentlichen konzentrisch zur Abscheidetrommel verlaufen. Ein derart ausgebildeter erster Teilabschnitt würde folglich eine für einen Dreschkorb übliche Form aufweisen und vorzugsweise mit Korbleisten und Korbdrähten versehen sein. Zur Vermeidung von Bruchstroh kann es außerdem sinnvoll sein, auch diesen als Korb ausgebildeten ersten Teilabschnitt des Leit- und Abscheideelements verstellbar zu gestalten.

Von besonderem Vorteil ist dabei eine Verstellung des letzten Teilabschnitts des Leit-und Abscheideelements zwischen einer ersten Maximalposition, in der dieser im Wesentlichen tangential zur Strohwendetrommel ausgerichtet ist, und einer zweiten Maximalposition, in der der letzte Teilabschnitt auf einen Eintrittsbereich der Nachabscheideeinrichtung gerichtet ist. In der ersten Maximalposition wird dabei eine starke Umlenkung des Gutstroms erzielt, die insbesondere bei Erntegut mit einer Restfeuchte als sinnvoll anzusehen ist. Wenn sich hingegen das Halmgut in einem sehr trockenen Zustand befindet, so kann der letzte Teilabschnitt in Richtung seiner zweiten Maximalposition verstellt werden, in der der Abscheide- und Förderkanal in Richtung der Nachabscheideeinrichtung geöffnet ist, so dass an dieser Stelle eine geringere Umlenkung des Gutstroms erzielt wird. Die Umlenkung kann zusätzlich natürlich auch dadurch verringert werden, dass in entsprechender Weise auch der erste Teilabschnitt des Leit- und Abscheideelements derart verstellt wird, dass das Halmgut ohne Umlenkung zu den Hordenschüttlern geleitet wird.

Weiterhin soll der erste Teilabschnitt des Leit- und Abscheideelements an seinen beiden Stirnseiten jeweils eine Längstraverse aufweisen, an welcher stirnseitig an dem letzten Teilabschnitt vorgesehene Halter schwenkbeweglich gelagert sind. Jeder dieser Halter kann dabei mit einem Zapfen oder einer Schraube versehen sein, über welche eine Schwenklagerung geschaffen wird. Eine Verstellung des letzten Teilabschnitts gegenüber dem ersten Teilabschnitt kann dabei in der Weise erfolgen, dass an dem Halter ein Hebel vorgesehen ist, an dem ein Gestänge oder ein in üblicher Weise ausgebildeter Aktuator angreift. Von besonderem Vorteil ist eine Ausbildung des letzten Teilabschnitts des Leit- und Abscheideelements, bei dem dieser als Fingerrechen ausgebildet ist. Ein derartiger Fingerrechen lässt sich mit geringem Fertigungsaufinrand herstellen, leitet den Erntegutstrom, ohne auf diesen einen Widerstand auszuüben, und kann in vorteilhafter Weise mit einer mit Zinken versehenen Abscheidetrommel zusammenwirken.

Eine besonders günstige Gestaltung der Gesamtanordnung ist dadurch erzielbar, dass Finger des Fingerrechens des letzten Teilabschnitts auf einer quer zur Strömungsrichtung des Erntegutstroms gerichteten Strebe angeordnet sind und dass an dieser Strebe auch ein sich vertikal erstreckendes Spritztuch befestigt ist. Dieses Spritztuch trennt einen Bereich des Dreschwerks gegenüber einem Bereich der Nachabscheideeinrichtung ab. Dadurch wird verhindert, dass Spreu, Kaff und Grannen auf den unterhalb des Dreschwerks verlaufenden Vorbereitungsboden gelangen. In vorteilhafter Weise lässt sich die Strebe dazu nutzen, dieses Spritztuch im Dreschkanal zu fixieren.

Schließlich soll bei einer Mehrtrommelanordnung nach dem Oberbegriff des Anspruchs 1 das Leit- und Abscheideelement einen ersten, sich im Wesentlichen unterhalb einer Quermittelebene der Abscheidetrommel tangential zu dieser erstreckenden Teilabschnitt aufweisen, der als Fingerrechen mit in Strömungsrichtung des Erntegutes verlaufenden Fingern ausgebildet ist.

Demzufolge kann der erste Teilabschnitt des Leit- und Abscheideelements konstruktiv ähnlich dem zuvor erläuterten letzten Teilabschnitt gestaltet sein. Dabei besteht außerdem die Möglichkeit, dass das gesamte Leit- und Abscheideelement nur aus diesem ersten Teilabschnitt besteht. Da das Leit- und Abscheideelement aus zumindest einem Fingerrechen gebildet wird, stellen sich insgesamt günstige Strömungsverhältnisse für das zwischen der Abscheidetrommel und diesem Fingerrechen strömende Halmgut ein.

Die Erfindung ist nicht auf die angegebene Kombination der Merkmale des Patentanspruchs 1 und der abhängigen Patentansprüche beschränkt. Es ergeben sich darüber hinaus weitere Möglichkeiten, einzelne Merkmale, insbesondere dann, wenn sie sich aus den Patentansprüchen, der nachfolgenden Beschreibung der Ausführungsbeispiele oder unmittelbar aus der Zeichnung ergeben, miteinander zu kombinieren. Außerdem soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

Weitere Merkmale der Erfindung ergeben sich im Übrigen aus der nachfolgenden Beschreibung und aus der Zeichnung, in der zwei Ausführungsbeispiele der Erfindung vereinfacht dargestellt sind. Es zeigen:
- Figur 1: als schematische Darstellung eine Seitenansicht einer als Mehrtrommelanordnung ausgebildeten Dresch- und Trenneinrichtung, bei der ein letzter Teilabschnitt eines Leit- und Abscheideelements in eine Position mit geringer Umlenkung des Halmguts verstellt ist,
- Figur 2: als schematische Darstellung die Dresch- und Trenneinrichtung gemäß Figur 1, bei der aber der letzte Teilabschnitt des Leit- und Abscheideelements in eine Position mit starker Umlenkung des Halmguts verstellt ist und
- Figur 3: eine perspektivische Darstellung einer erfindungsgemäßen Dresch- und Trenneinrichtung, bei der ein letzter Teilabschnitt des Leit- und Abscheideelements in seine Position mit starker Umlenkung des Gutstroms verstellt ist.

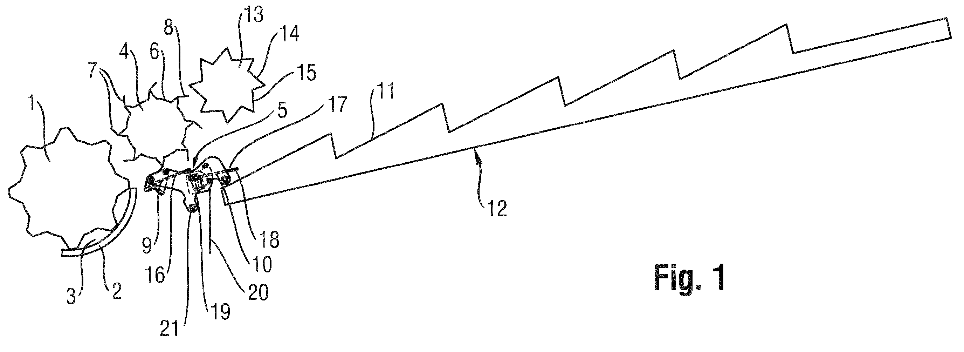

In der Figur 1 ist mit 1 eine Dreschtrommel bezeichnet, die mehrere über den Umfang verteilte profilierte Schlagleisten aufweist. Dabei ist der Dreschtrommel 1 ein einen gekrümmten Verlauf aufweisender Dresch- und Abscheidekorb 2 derart zugeordnet, dass zwischen der Dreschtrommel 1 und dem Dresch- und Abscheidekorb 2 ein Dreschspalt 3 gebildet wird. Der Dresch- und Abscheidekorb 2 ist an seiner der Dreschtrommel 1 zugewandten Oberfläche mit nicht näher dargestellten Korbleisten versehen.

In der vorliegenden Ansicht rotiert die Dreschtrommel 1 im Gegenuhrzeigersinn, so dass sie das Erntegut unter Abscheidung der Körner durch den Dreschspalt 3 fördert, wobei die abgeschiedenen Körner auf einen nicht näher dargestellten Vorbereitungsboden fallen. Dabei wird das über ein ebenfalls nicht dargestelltes Schneidwerk oder eine Pick-up aufgenommene Erntegut der Dresch- und Tenneinrichtung über einen nicht dargestellten Schrägförderer zugeführt.

In Förderrichtung der Dresch- und Trenneinrichtung schließt sich an die Dreschtrommel 1 eine Abscheidetrommel 4 an, die mit einem Leit- und Abscheideelement 5 zusammenwirkt. Dabei besteht die Abscheidetrommel 4 aus einem zylindrischen Grundkörper 6, auf dessen Umfang mehrere Zinkenreihen 7 angeordnet sind, wobei von den Zinkenreihen 7 ausgehende Zinken 8 gegenüber einer Drehrichtung der Abscheidetrommel 4, bei der es sich in der vorliegenden Ansicht ebenfalls um eine Drehrichtung im Gegenuhrzeigersinn handelt, nach hinten geneigt sind. Das Leit- und Abscheideelement 5 weist, wie ebenfalls aus der Figur 1 hervorgeht, einen ersten, mit Abstand tangential zur Abscheidetrommel 4 verlaufenden Teilabschnitt 9 auf, an den sich zumindest ein zweiter Teilabschnitt 10 anschließt, bei dem es sich im Sinne der Patentansprüche um den letzten Teilabschnitt handelt und der in der Figur 1 in Richtung einer Arbeitsfläche 11 eines nachgeschalteten Hordenschüttlers 12 weist.

Außerdem ist eine Strohwendetrommel 13 vorgesehen, deren Längsachse oberhalb einer Längsachse der Abscheidetrommel 4 sowie in horizontaler Ebene zu dieser versetzt angeordnet ist. Die Strohwendetrommel 13 weist einen Blechmantel 14 auf, wobei über Ausformungen des Blechmantels 14 Förderleisten 15 gebildet werden. Bei dem dargestellten Ausgestaltungsbeispiel der Erfindung sind sowohl der erste Teilabschnitt 9 als auch der zweite Teilabschnitt 10 des Leit- und Abscheideelements 5 als Fingerrechen 16 und 17 ausgebildet.

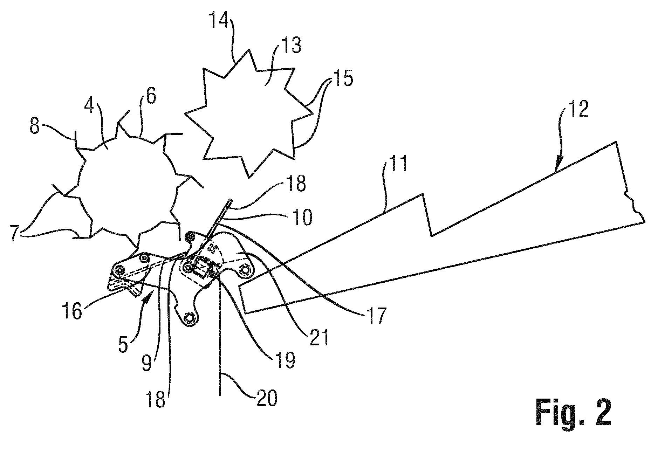

Die Darstellung nach der Figur 2 stimmt im Wesentlichen mit der nach Figur 1 überein, wobei allerdings der zweite Teilabschnitt 11 des Leit- und Abscheideelements 6, also der Fingerrechen 17, derart verstellt ist, dass die entsprechenden Finger 18 in Richtung der Strohwendetrommel 14 weisen. Dadurch erfolgt eine extreme Umlenkung des Halmgutes, die erfindungsgemäß für ein Halmgut mit einer vergleichsweise hohen Restfeuchtigkeit vorgesehen sein soll. Demgegenüber ist der Fingerrechen 17 in Figur 1 in eine Position bewegt, in der das Halmgut nahezu ohne Umlenkung auf die nachfolgenden Hordenschüttler 12 zubewegt wird. Diese Position ist vorgesehen, wenn es sich um ein sehr trockenes Halmgut handelt.

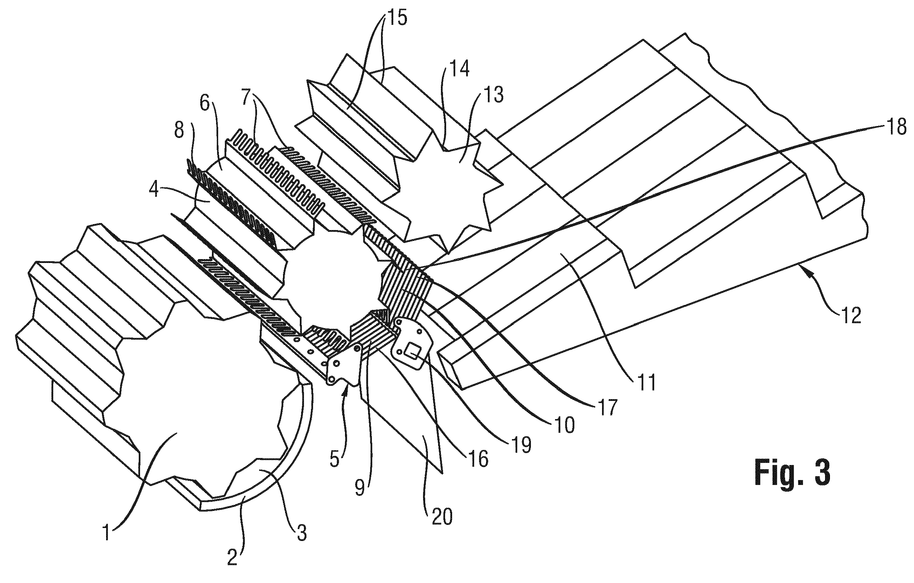

In der Figur 3 ist die erfindungsgemäße Dresch- und Trenneinrichtung nach den Figuren 1 und 2 perspektivisch dargestellt, wobei die gleichen Bezugszeichen wie in den Figuren 1 und 2 verwendet werden. Im Einzelnen ist diesen Figuren noch zusätzlich folgendes zu entnehmen: Die Finger 18 des Fingerrechens 17 sind auf einer als Vierkantrohr ausgebildeten Strebe 19 befestigt, die an ihren beiden Enden Halter aufweist. Von der Strebe 20 geht ein vertikal nach unten hängendes Spritztuch 20 aus, das den Dreschbereich der Vorrichtung von dem Bereich der Nachabscheideeinrichtung, also der Hordenschüttler 12 und eines nicht dargestellten Rücklaufbodens, trennt. Oberhalb der Strohwendetrommel 13 kann ein verstellbares Abschälblech angeordnet sein, mittels dessen Halmgut, das eventuell an der Oberfläche der Strohwendetrommel 13 haftet und von dieser in einen Umlauf bewegt werden würde, abgetrennt wird. Weiterhin geht von der Strebe 19 in radialer Richtung an beiden Enden ein Verstellhebel 21 ab, an dem ein nicht dargestelltes Gestänge oder ein Aktuator angreifen können. Der Fingerrechen 16 für den ersten Teilabschnitt 9 kann ebenfalls gegenüber einer ihn aufnehmenden Längstraverse verstellbar ausgebildet sein. Im Übrigen besteht die Möglichkeit, mehr als zwei verstellbare Fingerrechen 16, 17, die jeweils mit Abstand tangential zur Abscheidetrommel 4 verlaufen, vorzusehen. Daher ist der zweite Teilabschnitt 10 in den Patentansprüchen und den Vorteilsangaben als letzter Teilabschnitt bezeichnet.

Den Figuren 1 bis 3 folglich eine Ausbildung einer Mehrtrommelanordnung zu entnehmen, bei der die Problematik beseitigt werden kann, dass durch eine starke Umlenkung des eine geringe Menge von Restkorn aufweisenden Strohs Bruchstroh erzeugt wird, das anschließend in Form einer Matte die Arbeitsfläche und somit entsprechende Abscheideöffnungen der Hordenschüttler 12 verschließt, so dass von dem nachfolgenden Stroh abgeschiedenes Restkorn nicht mehr in die Schüttlerrücklauftaschen gelangen kann. Die Folge davon wäre anderenfalls, dass in unerwünschtem Maße Körnerverluste auftreten könnten. Durch die erfindungsgemäße Ausgestaltung des Leit- und Abscheideelements 5 wird erreicht, dass zum einen optimale Strömungsverhältnisse für das Erntegut erzielt werden, so dass dieses sehr schonend behandelt wird und dass zum anderen gerade bei sehr trockenem Erntegut eine extreme Umlenkung des Gutstroms, die zu Bruchstroh führen würde, vermieden wird.

**Bezugszeichenliste**

| | | | |
|---|---|---|---|
| **1** | Dreschtrommel | **15** | Förderleisten |
| **2** | Dresch- und Abscheidekorb | **16** | Fingerrechen erster Teilabschnitt |
| **3** | Dreschspalt | **17** | Fingerrechen zweiter Teilabschnitt |
| **4** | Abscheidetrommel | **18** | Finger |
| **5** | Leit- und Abscheidelement | **19** | Strebe |
| **6** | zylindrischer Grundkörper | **20** | Spritztuch |
| **7** | Zinkenreihen | **21** | Verstellhebel |
| **8** | Zinken | | |
| **9** | erster Teilabschnitt | | |
| **10** | zweiter Teilabschnitt | | |
| **11** | Arbeitsfläche | | |
| **12** | Hordenschüttler | | |
| **13** | Strohwendetrommel | | |
| **14** | Blechmantel | | |

## Patentansprüche

1. Mähdrescher mit einer als Mehrtrommelanordnung ausgebildeten Dresch- und Trenneinrichtung, die zumindest aus einer mit einem Dresch- und Abscheidekorb (2) zusammenwirkenden Dreschtrommel (1), einer dieser in Förderrichtung unmittelbar oder mittelbar nachgeordneten Abscheidetrommel (4) sowie aus einer dieser folgenden Strohwendetrommel (13) besteht, wobei die Abscheidetrommel (4) mit einem Leit- und Abscheideelement (5) zusammenwirkt und die Strohwendetrommel (13) oberhalb der Abscheidetrommel (4) und in horizontaler Richtung zu dieser versetzt angeordnet ist, und mit einer der Strohwendetrommel (13) nachgeordneten Nachabscheideeinrichtung, **dadurch gekennzeichnet, dass** das Leit- und Abscheideelement (5) einen ersten, sich im Wesentlichen unterhalb der Abscheidetrommel (4) tangential sowie beabstandet zu dieser erstreckenden Teilabschnitt (9) aufweist, an den sich in Förderrichtung zumindest ein weiterer Teilabschnitt (10) anschließt, und dass zumindest ein der Strohwendetrommel (13) benachbarter, tangential zu der Strohwendetrommel (13) verlaufender Teilabschnitt (10) um eine horizontale Schwenkachse verstellbar ist.

2. Mähdrescher nach Anspruch 1, **dadurch gekennzeichnet, dass** die Abscheidetrommel (4) mit über deren Umfang verteilten Zinkenreihen (7) versehen ist, wobei Zinken (8) der Zinkenreihen (7) jeweils gegenüber einer Drehrichtung der Abscheidetrommel (4) nach hinten geneigt sind.

3. Mähdrescher nach Anspruch 1, **dadurch gekennzeichnet, dass** der weitere Teilabschnitt (10) des Leit- und Abscheideelements (5) zwischen einer ersten Maximalposition, in der dieser im Wesentlichen tangential zur Strohwendetrommel (13) ausgerichtet ist, und einer zweiten Maximalposition, in der der weitere Teilabschnitt (10) auf einen Eintrittsbereich der Nachabscheideeinrichtung gerichtet ist, verstellbar ist.

4. Mähdrescher nach Anspruch 1, **dadurch gekennzeichnet, dass** der erste Teilabschnitt (9) des Leit- und Abscheideelements (5) an seinen beiden Stirnseiten jeweils eine Längstraverse aufweist, an welcher stirnseitig an dem weiteren Teilabschnitt (11) vorgesehene Halter schwenkbeweglich gelagert sind.

5. Mähdrescher nach Anspruch 1, **dadurch gekennzeichnet, dass** der weitere Teilabschnitt (10) des Leit- und Abscheideelements (5) als Fingerrechen (17) ausgebildet ist.

6. Mähdrescher nach Anspruch 1, **dadurch gekennzeichnet, dass** der erste Teilabschnitt (9) des Leit- und Abscheideelements (5) als Fingerrechen (16) ausgebildet ist.

## Claims

1. A combine harvester comprising a threshing and separating device which is in the form of a multi-drum arrangement and which comprises at least a threshing drum (1) cooperating with a threshing and separating concave (2), a separating drum (4) arranged directly or indirectly downstream of the threshing drum in the conveyor direction, and a straw turning drum (13) following the separating drum, wherein the separating drum (4) cooperates with a guide and separating element (5) and the straw turning drum (13) is arranged above the separating drum (4) and displaced relative thereto in the horizontal direction, and comprising a post-separating device arranged downstream of the straw turning drum (13), **characterised in that** the guide and separating element (5) has a first partial portion (9) extending substantially below the separating drum (4) tangentially and in spaced relationship therewith and which is adjoined in the conveyor direction by at least one further partial portion (10) and that at least one partial portion (10) adjacent to the straw turning drum (13) and extending tangentially relative to the straw turning drum (13) is displaceable about a horizontal pivot axis.

2. A combine harvester according to claim 1 **characterised in that** the separating drum (4) is provided with rows (7) of tines that are distributed over the periphery thereof, wherein tines (8) of the rows (7) of tines are respectively inclined rearwardly with respect to a direction of rotation of the separating drum (4).

3. A combine harvester according to claim 1 **characterised in that** the further partial portion (10) of the guide and separating element (5) is displaceable between a first maximum position in which it is oriented substantially tangentially relative to the straw turning drum (13) and a second maximum position in which the further partial portion (10) is directed towards an entry region of the post-separating device.

4. A combine harvester according to claim 1 **characterised in that** the first partial portion (9) of the guide and separating element (5) has at each of its two ends a respective longitudinal transverse portion at which holders provided on the further partial portion (11) are pivotably moveably mounted at the ends.

5. A combine harvester according to claim 1 **characterised in that** the further partial portion (10) of the guide and separating element (5) is in the form of a finger rake (17).

6. A combine harvester according to claim 1 **characterised in that** the first partial portion (9) of the guide and separating element (5) is in the form of a finger rake (16).

## Revendications

1. Moissonneuse-batteuse comportant un dispositif de battage et de séparation réalisé sous la forme d'un ensemble de plusieurs tambours qui se compose au moins d'un tambour de battage (1) qui coopère avec une corbeille de battage et de séparation (2), d'un tambour de séparation (4) disposé directement ou indirectement à la suite de celui-ci dans la direction de transport ainsi que d'un tire-paille (13) y faisant suite, le tambour de séparation (4) coopérant avec un élément de guidage et de séparation (5) et le tire-paille (13) étant disposé au-dessus du tambour de séparation (4) et décalé par rapport à celui-ci dans la direction horizontale, et comprenant un dispositif de séparation secondaire disposé à la suite du tire-paille (13), **caractérisée en ce que** l'élément de guidage et de séparation (5) présente une première partie (9) s'étendant sensiblement sous le tambour de séparation (4) tangentiellement ainsi qu'à distance de celui-ci, à laquelle fait suite, dans la direction de transport, au moins une autre partie (10), et **en ce qu'**au moins une partie (10) voisine du tire-paille (13), s'étendant tangentiellement au tire-paille (13), est réglable autour d'un axe de pivotement horizontal.

2. Moissonneuse-batteuse selon la revendication 1, **caractérisée en ce que** le tambour de séparation (4) est pourvu de rangées de dents (7) réparties sur sa périphérie, les dents (8) des rangées de dents (7) étant chaque fois inclinées vers l'arrière par rapport à un sens de rotation du tambour de séparation (4).

3. Moissonneuse-batteuse selon la revendication 1, **caractérisée en ce que** l'autre partie (10) de l'élément de guidage et de séparation (5) est réglable entre une première position maximale, dans laquelle elle est orientée sensiblement tangentiellement au tire-paille (13), et une deuxième position maximale, dans laquelle l'autre partie (10) est dirigée vers une zone d'entrée du dispositif de séparation secondaire.

4. Moissonneuse-batteuse selon la revendication 1, **caractérisée en ce que** la première partie (9) de l'élément de guidage et de séparation (5) présente sur chacune de ses faces frontales une traverse longitudinale sur laquelle des supports prévus sur les faces frontales de l'autre partie (11) sont montés de manière pivotante.

5. Moissonneuse-batteuse selon la revendication 1, **caractérisée en ce que** l'autre partie (10) de l'élément de guidage et de séparation (5) est réalisée sous la forme d'un peigne à doigts (17).

6. Moissonneuse-batteuse selon la revendication 1, **caractérisée en ce que** la première partie (9) de l'élément de guidage et de séparation (5) est réalisée sous la forme d'un peigne à doigts (16).
